# EUROPEAN PATENT APPLICATION

(11) **EP 4 328 188 A1**
(43) Date of publication of application: **28.02.2024**
(21) Application number: 23188342.2
(22) Date of filing: 28.07.2023
(51) Int. Cl.: C01G 53/00, H01M 4/505

(54) **PARTICLES CONVERTIBLE TO LITHIUM TRANSITION METAL COMPOSITE OXIDE AND METHOD FOR PRODUCING THE SAME**

(30) Priority: 24.08.2022 JP 2022133229
(71) Applicant: Prime Planet Energy & Solutions, Inc., Chuo-ku Tokyo 103-0022 (JP)
(72) Inventor: YAMAMOTO, Yuji, Tokyo, 103-0022 (JP); SUZUKI, Shinya, Tokyo, 103-0022 (JP)
(74) Representative: Kuhnen & Wacker Patent- und Rechtsanwaltsbüro PartG mbB

(57) **Abstract**

Provided are particles convertible to a lithium transition metal composite oxide that can reduce an initial resistance of a lithium ion secondary battery. The particles disclosed here are particles convertible to a lithium transition metal composite oxide by firing. Each of the particles includes lithium and a transition metal element. The particles have an average particle size of 2.0 µm or more. In the case of obtaining a reflected electron image of the particles with a scanning electron microscope, a domain observed as a brightest region in the particles has a maximum diameter less than 1 µm.

## Description

### TECHNICAL FIELD

The present disclosure relates to particles convertible to a lithium transition metal composite oxide. The present disclosure also relates to a method for producing the particles.

### BACKGROUND ART

Recent lithium ion secondary batteries are suitably used for, for example, portable power supplies for devices such as personal computers and portable terminals, and power supplies for driving vehicles such as battery electric vehicles (BEVs), hybrid electric vehicles (HEVs), and plug-in hybrid electric vehicles (PHEVs).

A typical lithium ion secondary battery uses a lithium transition metal composite oxide as a positive electrode active material. Examples of a method for producing this lithium transition metal composite oxide include a method of producing a hydroxide not containing lithium and containing a transition metal as a precursor, mixing the precursor with a lithium salt and firing the mixture (see, for example, Patent Documents 1 and 2), a method of producing a carbonate not containing lithium and containing a transition metal as a precursor, mixing the precursor with a lithium salt, and firing the mixture (see, for example, Patent Documents 3 and 4), and a method of granulating a hydroxide not containing lithium and containing a transition metal and a lithium salt by spray drying, and then firing the granulated particles (see, for example, Patent Document 5).

### CITATION LIST

### PATENT DOCUMENTS

Patent Document 1: JP2021-153058A
Patent Document 2: JP2021-180191A
Patent Document 3: JP2019-21425A
Patent Document 4: JP2021-136096A
Patent Document 5: JP2018-129140A

### SUMMARY OF THE INVENTION

An intensive study of inventors of the present disclosure has revealed that the conventional technique has the problem of an insufficient reduction of resistance of a lithium ion secondary battery in the case of using the obtained lithium transition metal composite oxide for the lithium ion secondary battery as a positive electrode active material.

It is therefore an object of the present disclosure to provide particles convertible to a lithium transition metal composite oxide that can reduce an initial resistance of a lithium ion secondary battery.

The particles disclosed here are particles convertible to a lithium transition metal composite oxide by firing. Each of the particles contains lithium and a transition metal element. The particles have an average particle size of 2.0 µm or more. In the case of obtaining a reflected electron image of the particles with a scanning electron microscope, a domain observed as a brightest region in the particles has a maximum diameter less than 1 µm.

A method for producing particles disclosed here includes the steps of: preparing a mixed solution in which a water-soluble salt of lithium, a water-soluble salt of a transition metal, an ammonium ion donor, and a basic compound are dissolved; and precipitating particles containing lithium and the transition metal from the mixed solution. In this method, (a) the basic compound is a hydroxide of an alkali metal or a hydroxide of an alkali earth metal, and a mole ratio of lithium to the transition metal in the mixed solution is 65 or more and 110 or less, (b) the basic compound is a carbonate of an alkali metal or a carbonate of an alkali earth metal, and a mole ratio of lithium to the transition metal in the mixed solution is 5.0 or more and 8.5 or less, or (c) the basic compound is a carbonate of an alkali metal or a carbonate of an alkali earth metal, and in the step of precipitating the particles, a water-soluble organic solvent having a solubility parameter δ of 13.0 or less and a polarity parameter P' of 3.5 or more is added to the mixed solution.

This configuration can provide particles convertible to a lithium transition metal composite oxide that can reduce an initial resistance of a lithium ion secondary battery.

### BRIEF DESCRIPTION OF THE DRAWINGS

FIG. 1 is a cross-sectional view schematically illustrating a structure of a lithium ion secondary battery using a fired product of particles according to one embodiment of the present disclosure.
FIG. 2 is a schematic disassembled view illustrating a structure of a wound electrode body of the lithium ion secondary battery illustrated in FIG. 1.
FIG. 3 is a reflected electron image of particles of Comparative Example 2.
FIG. 4 is a reflected electron image of particles of Example 1.

### DETAILED DESCRIPTION OF THE PREFERRED EMBODIMENTS

An embodiment of the present disclosure will be described hereinafter with reference to the drawings. Matters not mentioned in the specification but required for carrying out the present disclosure can be understood as matters of design variation of a person skilled in the art based on the related art in the field. The present disclosure can be carried out on the basis of the contents disclosed in the specification and common general knowledge in the field. In the drawings, members and parts having the same functions are denoted by the same reference characters for description. Dimensional relationships (e.g., length, width, and thickness) in the drawings do not reflect actual dimensional relationships.

A "secondary battery" herein refers to a power storage device capable of being repeatedly charged and discharged, and includes a so-called storage battery and a power storage element such as an electric double layer capacitor. A "lithium ion secondary battery" herein refers to a secondary battery that uses lithium ions as charge carriers and performs charge and discharge by movement of charges accompanying lithium ions between positive and negative electrodes.

Particles according to this embodiment are particles convertible to a lithium transition metal composite oxide by firing. Each of the particles contains lithium and a transition metal element. The particles have an average particle size of 2.0 µm or more. In the case of obtaining a reflected electron image of the particles with a scanning electron microscope, a maximum diameter of a domain observed as a brightest region in the particles is less than 1 µm.

When particles according to this embodiment are converted to a lithium transition metal composite oxide by firing, it can be used as a positive electrode active material of a lithium ion secondary battery. Thus, the particles according to this embodiment can also be regarded as a lithium-containing precursor particles of a positive electrode active material of a lithium ion secondary battery. The particles according to this embodiment are desirably particles convertible to a lithium transition metal composite oxide having a layered rock-salt crystal structure by firing.

The particles according to this embodiment are typically particles of a compound that is converted to a lithium transition metal composite oxide when being subjected to a heat treatment at a temperature of 600 °C or more and 1000 °C or less for one hour or more. Examples of such a compound include hydroxide, carbonate, sulfate, nitrate, and oxalate. The particles according to this embodiment are typically hydroxide or carbonate.

Each of the particles according to this embodiment contain Li and a transition metal element. Thus, the particles according to this embodiment are different from a mixture of particles containing Li and particles containing a transition metal element. It should be noted that a fact that Li and a transition metal element are contained in one particle can be confirmed by a known method (e.g., Auger electron spectroscopic (AES) analysis with a scanning electron microscope including an Auger electron spectrometer).

The transition metal element included in the particles is not particularly limited, and examples of the transition metal include Zr, Mo, Co, Fe, Ni, Mn, Cu, Cr, V, Nb, Pt, Pd, Ru, Rh, Au, Ag, Ti, Nb, and W. From the viewpoint of characteristics of a lithium ion secondary battery using a fired product of the particles according to this embodiment, the transition metal contained in the particles desirably includes at least one transition metal element selected from the group consisting of Ni, Co, and Mn, and more desirably includes at least Ni, Co, and Mn.

The particles according to this embodiment generally contain oxygen, and can further contain carbon and hydrogen. As described above, the particles according to this embodiment are typically hydroxide or carbonate, and in a case where the particles according to this embodiment are hydroxide, the particles further contain oxygen and hydrogen. In a case where the particles according to this embodiment are carbonate, the particles further contain oxygen and carbon.

The particles according to this embodiment may further include: a metal element other than transition metals such as Na, Mg, Ca, Al, Zn, and Sn; a semimetal element such as B, Si, or P; a nonmetal element such as S, F, Cl, Br, or I; and other elements.

Since the lithium ion secondary battery using the fired product of the particles according to this embodiment has an especially low initial resistance, in the particles according to this embodiment, an atomic ratio of lithium to the transition metal element is desirably 0.75 or more and 1.25 or less, more desirably 0.80 or more and 1.20 or less, and even more desirably 1.05 or more and 1.10 or less.

The type of elements included in the particles according to this embodiment can be observed by a known method (e.g., high-frequency inductively coupled plasma (ICP) atomic emission spectroscopy). The atomic ratio of lithium to the transition metal element can also be observed by a known method (e.g., high-frequency inductively coupled plasma (ICP) atomic emission spectroscopy).

The particles according to this embodiment are typically secondary particles of agglomerated primary particles, but may be primary particles. The particles according to this embodiment have an average particle size of 2.0 µm or more, desirably 3.0 µm or more. An upper limit of the average particle size of the particles according to this embodiment is not particularly limited, and is, for example, 25.0 µm or less, desirably 20.0 µm or less. It should be noted that the average particle size of the particles can be obtained by measuring a particle size distribution of the particles on a volume basis by laser diffraction scattering, and determining a particle size (i.e., median diameter: D50) whose cumulative frequency is 50% by volume in the particle size distribution.

In the case of obtaining a reflected electron image of the particles according to this embodiment with a scanning electron microscope (SEM), a maximum diameter of a domain observed as a brightest region (typically a white region) in in the particles is less than 1 µm.

Regarding the reflected electron image with the SEM, emission of reflected electrons from a sample irradiated with an electron beam depends on an average atomic number of a material constituting the sample, and as the atomic number increases, the emission amount increases. Accordingly, in the reflected electron image, a portion including a large number of elements with small atomic numbers is observed as a dark portion, whereas a portion including a large number of elements with large atomic numbers is observed as a bright portion.

In one particle containing Li and the transition metal element, in a case where Li distribution (i.e., dispersion state) is not uniform, a region where transition metal elements are collectively present is generated and forms the brightest region in the particle in the reflected electron image. This region is herein referred to as a "domain." Thus, the size of this domain is closely related to a dispersion state of Li in the particle.

In this embodiment, the state where the maximum diameter of the domain is less than 1 µm means that Li is highly dispersed in the particle. In a case where such particles are fired to obtain a lithium transition metal composite oxide and the obtained lithium transition metal composite oxide is used as a positive electrode active material of a lithium ion secondary battery, initial resistance of the lithium ion secondary battery can be reduced. This is supposed to be because of the following reasons. In the case of firing particles in which the domain has a maximum diameter less than 1 µm, that is, particles in which Li is highly dispersed in the particles, reaction between a Li-containing domain and a transition metal-containing domain is promoted. It is thereby possible to obtain a lithium transition metal composite oxide in which an arrangement state of Li and the transition metal element is improved (specifically, Li site occupancy is high). This improved arrangement state of Li and the transition metal element contributes to reduction of resistance of the lithium ion secondary battery.

In addition, the particles according to this embodiment contain Li and the transition metal element. Thus, in a conventionally employed method for producing a positive electrode active material, Li salt subjected to a pretreatment such as pulverization and drying is mixed to a positive electrode active material precursor that is a hydroxide or carbonate, and the mixture is fired. On the other hand, in the case of using the particles according to this embodiment, mixing of Li salt is unnecessary, and a positive electrode active material can be easily produced. That is, the particles according to this embodiment have excellent productivity of the positive electrode active material.

The particles according to this embodiment may be crystal or amorphous, and is desirably amorphous. In the case where the particles according to this embodiment are amorphous, when a fired product of the particles is used for a lithium ion secondary battery, an increase in resistance after repetitive charge and discharge of the lithium ion secondary battery can be suppressed. Accordingly, durability of the lithium ion secondary battery is increased. This is supposed to be because the amorphous state of the particles eases rearrangement of transition metal elements in firing so that a lithium transition metal composite oxide with small composition unevenness can be obtained. It should be noted that in the case where the particles according to this embodiment are carbonate, the particles can be made amorphous. On the other hand, in the case where the particles according to this embodiment are hydroxide, the particles can be made crystal.

Crystallinity of the particles can be confirmed by performing measurement on the particles by an X-ray diffraction (XRD) method and observing a peak of a (003) plane of an R3m phase derived from a metal hydroxide in an X-ray diffraction spectrum. In the case where the particles are crystal, a sharp peak is observed in the (003) plane of the R3m phase. In the case where the particles are amorphous, a halo pattern with a broad peak is observed in an X-ray diffraction spectrum.

Next, a method for producing particles according to this embodiment will be described. The method for producing particles according to this embodiment employs a coprecipitation process, and is divided into three methods (a) through (c) described below.

Specifically, the production method includes the steps of: preparing a mixed solution in which a water-soluble salt of lithium, a water-soluble salt of a transition metal, an ammonium ion donor, and a basic compound are dissolved (hereinafter also referred to as a "mixed solution preparation step S1"); and precipitating particles containing lithium and the transition metal from the mixed solution (hereinafter also referred to as a "precipitation step S2"). Here, as method (a), the basic compound is a hydroxide of an alkali metal or a hydroxide of an alkali earth metal, and a mole ratio of lithium to the transition metal in the mixed solution is 65 or more and 105 or less. As method (b), the basic compound is a carbonate of an alkali metal or a carbonate of an alkali earth metal, and a mole ratio of lithium to the transition metal is 5.0 or more and 8.5 or less. As method (c), the basic compound is a carbonate of an alkali metal or a carbonate of an alkali earth metal, and in the precipitation step S2, a water-soluble organic solvent having a solubility parameter δ of 13.0 or less and a polarity parameter P' of 3.5 or more is added to the mixed solution. First, the mixed solution preparation step S1 will be described.

As a Li source, a water-soluble salt of lithium is used. Examples of the water-soluble salt of lithium include lithium sulfate, lithium nitrate, and lithium halide (e.g., lithium chloride). The water-soluble salt of lithium may be a hydrate. Among these materials, because of usability of a material derived from natural resources, lithium sulfate and lithium chloride are desirable, and lithium sulfate is more desirable.

As a transition metal source, a water-soluble salt of the transition metal is used. Examples of the water-soluble salt of the transition metal include sulfate, nitrate, and oxalate of the transition metal, and among these materials, sulfate of the transition metal is desirable. The water-soluble salt of the transition metal may be a hydrate.

Examples of the ammonium ion donor include ammonium hydroxide (NH₄OH), ammonium sulfate, ammonium nitrate, ammonium halide, and aqueous ammonia, and among these materials, ammonium hydroxide is desirable.

In method (a), as the basic compound, a hydroxide of an alkali metal or an alkali earth metal is used. Accordingly, the obtained particles are crystalline hydroxide particles. Examples of the hydroxide of an alkali metal or an alkali earth metal include sodium hydroxide, potassium hydroxide, and calcium hydroxide, and among these materials, sodium hydroxide is desirable.

In methods (b) and (c), as the basic compound, a carbonate of an alkali metal or an alkali earth metal is used. Accordingly, the obtained particles are amorphous carbonate. Examples of calcium carbonate of an alkali metal or an alkali earth metal include sodium carbonate, potassium carbonate, and calcium carbonate, and among these materials, sodium carbonate is desirable.

As water, from the viewpoint of preventing contamination of an impurity, ion-exchanged water, distilled water, ultrafilterd water, and reverse osmosis water can be desirably used.

In the mixed solution preparation step S1, these materials are mixed in a vessel, for example. The vessel may be, for example, a vessel or a reactor used in a known coprecipitation process. The order of addition of a water-soluble salt of lithium, a water-soluble salt of a transition metal, an ammonium hydroxide, a hydroxide of an alkali metal or an alkali earth metal, and water is not particularly limited. Each of the water-soluble salt of lithium, the water-soluble salt of a transition metal, the ammonium hydroxide, and the hydroxide of an alkali metal or an alkali earth metal may be added to the vessel in a solid state or a state of an aqueous solution thereof.

When the mole ratio of lithium to the transition metal (Li/transition metal) in the mixed solution is excessively small, an excessively small amount of Li is contained in the obtained particles, and a mole ratio of Li/transition metal in the particle, suitable for a positive electrode active material cannot be obtained. On the other hand, when the mole ratio of lithium salt to the transition metal (Li/transition metal) in the mixed solution is excessively large, particles of a precipitated lithium salt are mixed in deposited particles. The mole ratio of lithium to the transition metal coincides with a ratio of a molar concentration of lithium to a molar concentration of the transition metal.

In method (a), a large excessive amount of Li is used. Thus, the mole ratio (Li/transition metal) described above is 65 or more and 105 or less. From the view point of further reduction of resistance of a lithium ion secondary battery using a fired product of the particles according to this embodiment, the mole ratio (Li/transition metal) is desirably 80 or more and 100 or less, more desirably 85 or more and 95 or less.

In method (b), an excessive amount of Li is used. The mole ratio (Li/transition metal) is 5.0 or more and 8.5 or less. From the view point of further reduction of resistance of a lithium ion secondary battery using a fired product of the particles according to this embodiment, the mole ratio (Li/transition metal) is desirably 6.0 or more and 8.0 or less, more desirably 6.5 or more and 7.5 or less.

In method (c), in the precipitation step S2, a water-soluble organic solvent is used. According to this, the amount of use of the water-soluble salt of lithium can be reduced, as compared to method (b). Thus, in method (c), the mole ratio (Li/transition metal) can be smaller than that in method (b), and suitably set depending on the type and amount of the water-soluble organic solvent. The mole ratio (Li/transition metal) is, for example, 2.0 or more and 7.5 or less, desirably 3.0 or more and 6.0 or less.

A concentration of a transition metal in the mixed solution is not particularly limited. In method (a), the concentration is, for example, 0.070 mol/L or more and 0.12 mol/L or less. In methods (b) and (c), the concentration is, for example, 0.70 mol/L or more and 1.2 mol/L or less. A concentration of a water-soluble salt of lithium in the mixed solution may be determined based on the concentration of the transition metal and the mole ratio (Li/transition metal) in the mixed solution.

Ammonium ions donated from the ammonium ion donor form a complex with a transition metal. A concentration of the ammonium ion donor is desirably a concentration with which a mole ratio of ammonium ions to the transition metal (NH₄⁺/transition metal) is about 0.5 (e.g., 0.1 or more and 1 or less).

A concentration of the basic compound is desirably 1.0 mol/L or more and 10.0 mol/L or less, more desirably 3.0 mol/L or more and 7.0 mol/L or less.

Next, the precipitation step S2 will be described. The precipitation step S2 can be performed by causing a crystallization reaction in the mixed solution. For example, the step S2 can be performed by stirring the mixed solution for a predetermined time. The stirring can promote the crystallization reaction.

In method (c), in the precipitation step S2, a water-soluble organic solvent having a solubility parameter δ of 13.0 or less and a polarity parameter P' of 3.5 or more is added to the mixed solution. On the other hand, in methods (a) and (b), this water-soluble organic solvent is not basically added. In methods (a) and (b), the mixed solution prepared in step S1 is generally supplied in the precipitation step S2 without any treatment.

In method (c), by adding the water-soluble organic solvent having a solubility parameter δ of 13.0 or less and a polarity parameter P' of 3.5 or more, in the case of using a fired product of the obtained particles (i.e., lithium transition metal composite oxide) for a lithium ion secondary battery, initial resistance of the lithium ion secondary battery can be significantly reduced. This is supposed to be because the water-soluble organic solvent promotes generation of nuclei of Li so that the size of a domain containing Li can be reduced.

Examples of the water-soluble organic solvent include methanol, ethanol, isopropyl alcohol, tetrahydrofuran, dimethylformamide, dimethyl sulfoxide, and dioxane. Among these materials, methanol, ethanol, and tetrahydrofuran are desirable, and ethanol is more desirable. Values of the solubility parameter δ and the polarity parameter P' can be determined with reference to a handbook or the like.

The additive amount of the water-soluble organic solvent is not particularly limited. The water-soluble organic solvent is added at a concentration of desirably 1 mol/L or more and 50 mol/L or less, more desirably 5 mol/L or more and 40 mol/L or less, even more desirably 10 mol/L or more and 30 mol/L or less in the mixed solution.

The timing when the water-soluble organic solvent is added to the mixed solution is not particularly limited, and may be any of before the crystallization reaction, during the crystallization reaction, or after the crystallization reaction. The water-soluble organic solvent also promotes nuclei generation of a transition metal component. Thus, from the viewpoint of promoting nucleus generation only of the Li component, the timing of addition of the water-soluble organic solvent is desirably after the crystallization reaction. After the addition of the water-soluble organic solvent to the mixed solution, the Li component is desirably precipitated for desirably 10 minutes or more and 5 hours or less (especially 30 minutes or more and 3 hours or less).

The reaction temperature is not particularly limited. From the viewpoint of solubility of a material used, for example, the reaction temperature is desirably 10 °C or more, more desirably 25 °C or more. On the other hand, from the viewpoint of suppressing volatilization of NH3, for example, the reaction temperature is desirably 50 °C or less, more desirably 35 °C or less. The reaction time may be appropriately determined depending on the concentration of the transition metal in the mixed solution, the reaction temperature, and other factors. The reaction time is desirably 0.5 hours or more and 72 hours or less, more desirably 1 hour or more and 24 hours or less.

The precipitation step S2 may be performed in an air atmosphere or in an inert gas atmosphere such as a nitrogen gas or an argon gas.

Through the precipitation step S2, the particles according to this embodiment can be obtained as a precipitate. The precipitate can be collected by a known method. For example, the precipitate can be collected by a solid-liquid separation method such as filtration, washed with, for example, water, and dried to obtain the particles according to this embodiment.

The particles according to this embodiment can be converted to a lithium transition metal composite oxide by firing. This lithium transition metal composite oxide can be suitably used as a positive electrode active material of a lithium ion secondary battery.

Firing can be carried out with a known furnace by performing a heat treatment at 600 °C or more and 1000 °C or less for one hour or more (e.g., 1 hour or more and 48 hours or less, desirably 5 hours or more and 24 hours or less).

From the viewpoint of enhancing crystallinity of an obtained oxide, firing is desirably performed in an oxygen-containing atmosphere. Examples of the oxygen-containing atmosphere include an air atmosphere or a gas atmosphere containing oxygen. The oxygen concentration in the atmosphere is desirably 10 vol% or more and 100 vol% or less, more desirably 18 vol% or more and 100 vol% or less.

In the case of fabricating a lithium ion secondary battery using the lithium transition metal composite oxide obtained by firing, the lithium ion secondary battery has small initial resistance, and thus, has excellent output characteristics. A specific configuration of a lithium ion secondary battery will be described with reference to the drawings.

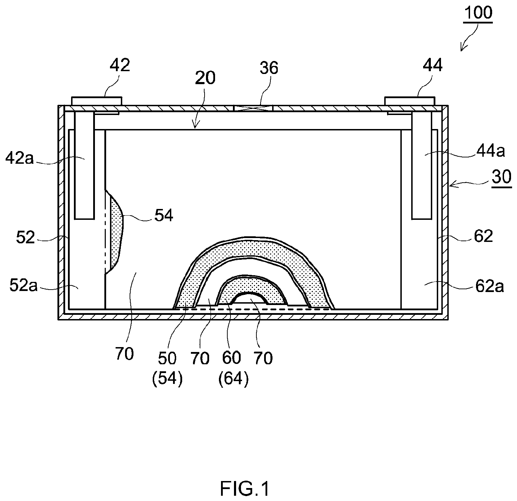

A lithium ion secondary battery 100 illustrated in FIG. 1 is a sealed battery configured by housing a flat wound electrode body 20 and a nonaqueous electrolyte (not shown) in a flat square battery case (i.e., outer container) 30. The battery case 30 includes a positive electrode terminal 42 and a negative electrode terminal 44 for external connection, and a thin safety valve 36 configured such that when the internal pressure of the battery case 30 increases to a predetermined level or more, the safety valve 36 releases the internal pressure. The positive and negative electrode terminals 42 and 44 are electrically connected to positive and negative electrode current collector plates 42a and 44a, respectively. A material for the battery case 30 is, for example, a metal material that is lightweight and has high thermal conductivity, such as aluminium.

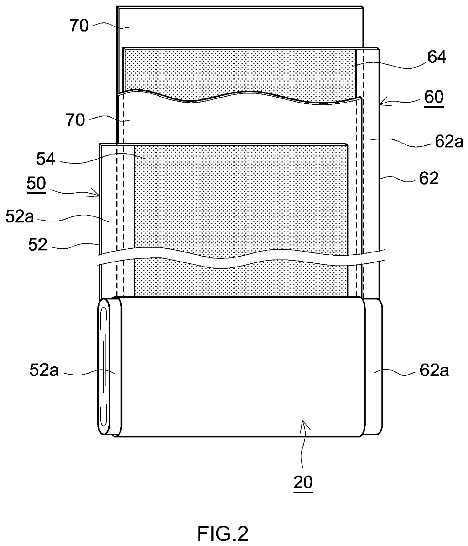

As illustrated in FIGS. 1 and 2, in the wound electrode body 20, a positive electrode sheet 50 and a negative electrode sheet 60 are stacked with two long separator sheets 70 interposed therebetween and are wound in the longitudinal direction. In the positive electrode sheet 50, a positive electrode active material layer 54 is formed on one or each (each in this example) surface of a long positive electrode current collector 52 along the longitudinal direction. In the negative electrode sheet 60, a negative electrode active material layer 64 is formed on one or each (each in this example) surface of a long negative electrode current collector 62 along the longitudinal direction. The positive electrode active material layer non-formed portion 52a (i.e., a portion where no positive electrode active material layer 54 is formed and the positive electrode current collector 52 is exposed) and a negative electrode active material layer non-formed portion 62a (i.e., a portion where no negative electrode active material layer 64 is formed and the negative electrode current collector 62 is exposed) extend off outward from both ends of the wound electrode body 20 in the winding axis direction (i.e., sheet width direction orthogonal to the longitudinal direction). The positive electrode current collector plate 42a and the negative electrode current collector plate 44a are respectively joined to the positive electrode active material layer non-formed portion 52a and the negative electrode active material layer non-formed portion 62a.

Examples of the positive electrode current collector 52 constituting the positive electrode sheet 50 include aluminium foil. The positive electrode active material layer 54 includes, as the positive electrode active material, at least a lithium transition metal composite oxide that is a fired product of the particles according to this embodiment described above. The positive electrode active material layer 54 can further include a conductive material, a binder, and other materials. Desired examples of the conductive material include carbon black such as acetylene black (AB) and other carbon materials (e.g., graphite). Examples of the binder include polyvinylidene fluoride (PVDF).

Examples of the negative electrode current collector 62 constituting the negative electrode sheet 60 include copper foil. The negative electrode active material layer 64 includes a negative electrode active material. Examples of the negative electrode active material include carbon materials such as graphite, hard carbon, and soft carbon. The negative electrode active material layer 64 can further include a binder, a thickener, and other materials. Examples of the binder include styrene-butadiene rubber (SBR). Examples of the thickener include carboxymethyl cellulose (CMC).

As the separator 70, various porous sheets the same as or similar to those conventionally used for lithium ion secondary batteries can be used, and examples thereof include porous resin sheets made of resins such as polyethylene (PE) and polypropylene (PP). The porous resin sheet may have a single-layer structure or a two or more layered structure (e.g., three-layer structure in which PP layers are stacked on both surfaces of a PE layer). The separator 70 may include a heat-resistant layer (HRL).

The nonaqueous electrolyte may be the same as or similar to that used for a conventional lithium ion secondary battery, and is typically one in which a supporting electrolyte is contained in an organic solvent (nonaqueous solvent). Examples of the nonaqueous solvent include aprotic solvents such as carbonates, esters, and ethers. Among these materials, carbonates are desirable because of an especially enhanced effect of reducing low-temperature resistance by a positive electrode material. Examples of the carbonates include ethylene carbonate (EC), diethyl carbonate (DEC), dimethyl carbonate (DMC), ethyl methyl carbonate (EMC), monofluoroethylene carbonate (MFEC), difluoroethylene carbonate (DFEC), monofluoromethyl difluoromethyl carbonate (F-DMC), and trifluorodimethyl carbonate (TFDMC). Such nonaqueous solvents may be used alone or two or more of them may be used in combination. Desired examples of the supporting electrolyte include lithium salts such as LiPF6, LiBF4, and lithium bis(fluorosulfonyl)imide (LiFSI). A concentration of the supporting electrolyte is desirably 0.7 mol/L or more and 1.3 mol/L or less.

The nonaqueous electrolyte can include components other than the nonaqueous electrolyte and the supporting electrolyte described above, such as additives exemplified by a gas generating agent, a film forming agent, a disperser, and a thickener, as long as effects of the present disclosure are not significantly impaired.

The lithium ion secondary battery 100 has advantages of low initial resistance and excellent output characteristics. The lithium ion secondary battery 100 is applicable to various applications. Examples of desired applications include drive power supplies to be mounted on vehicles such as battery electric vehicles (BEVs), hybrid electric vehicles (HEVs), and plug-in hybrid electric vehicles (PHEVs). The lithium ion secondary battery 100 can be used as a storage battery for, for example, a small-size power storage device. The lithium ion secondary battery 100 can be used in a battery pack in which a plurality of batteries are typically connected in series and/or in parallel.

The foregoing description has been directed to the square lithium ion secondary battery including the flat wound electrode body as an example. However, the lithium transition metal composite oxide that is a fired product of the particles according to this embodiment is also applicable to other types of lithium ion secondary batteries according to a known method. For example, the lithium transition metal composite oxide that is a fired product of the particles according to this embodiment may be used to produce a lithium ion secondary battery including a stacked-type electrode body (i.e., electrode body in which a plurality of positive electrodes and a plurality of negative electrodes are alternately stacked). The lithium transition metal composite oxide that is a fired product of the particles according to this embodiment may also be used to produce a cylindrical lithium ion secondary battery, a coin type lithium ion secondary battery, or a laminate-cased lithium ion secondary battery, for example. An all-solid-state secondary battery using a solid electrolyte can also be produced.

Examples of the present disclosure will now be described, but it is not intended to limit the present disclosure to these examples.

### <Production of particles>

### Example 1

In a vessel, a lithium sulfate monohydrate (Li₂SO₄ · H₂O), a hydrate of transition metal sulfate, sodium hydroxide (NaOH), ammonium hydroxide (NH₄OH), and ion-exchanged water were mixed such that a concentration of the lithium sulfate was 3.7 mol/L, a concentration of transition metal sulfate was 0.083 mol/L, a concentration of NaOH was 5.1 mol/L, and a concentration of NH₄OH was 0.042 mol/L. In the examples and the comparative examples, as a hydrate of a transition metal sulfate, a mixture including nickel sulfate hexahydrate, cobalt sulfate heptahydrate, and manganese sulfate pentahydrate at a mole ratio of Ni : Co : Mn = 1 : 1 : 1 was used.

A crystallization reaction was performed for five hours, and a precipitate was collected by filtration. The precipitate was washed with ion-exchanged water on a funnel, and then immersed in water for washing. The precipitate was subjected to filtration again to be collected, and the resulting precipitate was dried. In this manner, particles of Example 1 were obtained.

### Example 2

Particles of Example 2 were obtained by a method similar to Example 1 except that the mixing was performed such that the concentration of lithium sulfate was 3.7 mol/L, the concentration of transition metal sulfate was 0.080 mol/L, the concentration of NaOH was 5.1 mol/L, and the concentration of NH₄OH was 0.040 mol/L.

### Example 3

Particles of Example 3 were obtained by a method similar to Example 1 except that the mixing was performed such that the concentration of lithium sulfate was 3.7 mol/L, the concentration of transition metal sulfate was 0.11 mol/L, the concentration of NaOH was 5.1 mol/L, and the concentration of NH₄OH was 0.055 mol/L.

### Example 4

Particles of Example 4 were obtained by a method similar to Example 1 except that the mixing was performed such that the concentration of lithium sulfate was 3.8 mol/L, the concentration of transition metal sulfate was 0.074 mol/L, the concentration of NaOH was 5.1 mol/L, and the concentration of NH₄OH was 0.037 mol/L.

### Example 5

In a vessel, lithium sulfate monohydrate (Li₂SO₄ · H₂O), a hydrate of transition metal sulfate, sodium carbonate (Na₂CO₃), ammonium hydroxide (NH₄OH), and ion-exchanged water were mixed such that a concentration of lithium sulfate was 3.0 mol/L, a concentration of transition metal sulfate was 0.85 mol/L, a concentration of Na₂CO₃ was 5.1 mol/L, and a concentration of NH₄OH was 0.43 mol/L.

A crystallization reaction was performed for five hours, and a precipitate was collected by filtration. The precipitate was washed with ion-exchanged water on a funnel, and then immersed in water for washing. The precipitate was subjected to filtration again to be collected, and the resulting precipitate was dried. In this manner, particles of Example 5 were obtained.

### Example 6

In a vessel, lithium sulfate monohydrate (Li₂SO₄ · H₂O), a hydrate of transition metal sulfate, sodium carbonate (Na₂CO₃), ammonium hydroxide (NH₄OH), and ion-exchanged water were mixed such that a concentration of lithium sulfate was 2.4 mol/L, a concentration of transition metal sulfate was 1.4 mol/L, a concentration of Na₂CO₃ was 5.1 mol/L, and a concentration of NH₄OH was 0.7 mol/L.

A crystallization reaction was performed for five hours, and ethanol was added at a concentration of 20 mol/L. Thereafter, a precipitate was collected by filtration. The precipitate was washed with ion-exchanged water on a funnel, and then immersed in water for washing. The precipitate was subjected to filtration again to be collected, and the resulting precipitate was dried. In this manner, particles of Example 6 were obtained.

### Example 7

In a vessel, lithium sulfate monohydrate (Li₂SO₄ · H₂O), a hydrate of transition metal sulfate, sodium carbonate (Na₂CO₃), ammonium hydroxide (NH₄OH), and ion-exchanged water were mixed such that a concentration of lithium sulfate was 2.9 mol/L, a concentration of transition metal sulfate was 0.9 mol/L, a concentration of Na₂CO₃ was 5.1 mol/L, and a concentration of NH₄OH was 0.45 mol/L.

A crystallization reaction was performed for five hours, and tetrahydrofuran (THF) was added at a concentration of 13 mol/L. Thereafter, a precipitate was collected by filtration. The precipitate was washed with ion-exchanged water on a funnel, and then immersed in water for washing. The precipitate was subjected to filtration again to be collected, and the resulting precipitate was dried. In this manner, particles of Example 7 were obtained.

### Example 8

Particles of Example 8 were obtained in a manner similar to Example 7 except that methanol was added at a concentration of 29 mol/L, instead of adding tetrahydrofuran at a concentration of 13 mol/L.

### Comparative Example 1

In a vessel, a hydrate of transition metal sulfate, sodium hydroxide (NaOH), ammonium hydroxide (NH₄OH), and ion-exchanged water were mixed, a crystallization reaction was performed for five hours, and a precipitate was collected by filtration. The precipitate was washed with ion-exchanged water on a funnel, and then immersed in water for washing. The precipitate was subjected to filtration again to be collected, and the resulting precipitate was dried. In this manner, particles of Comparative Example 1 were obtained.

### Comparative Example 2

Lithium carbonate (Li₂CO₃), nickel hydroxide (Ni(OH)₂), cobalt carbonate (CoCO₃), and manganese carbonate (MnCO₃) were dispersed in water, thereby obtaining a material dispersion. The material dispersion was spray-dried with a spray-drying device, thereby obtaining particles.

It should be noted that an average particle size of the particles obtained in the examples and the comparative examples was about 5 µm.

### <AES-SEM Evaluation>

An AES analysis was performed on the particles obtained in the examples and the comparative examples with a scanning electron microscope provided with an Auger electron spectrometer. In the particles of Comparative Example 2 and Examples, it was observed that both Li and a transition metal elements (Ni, Co, Mn) were present in one particle.

### <SEM Evaluation>

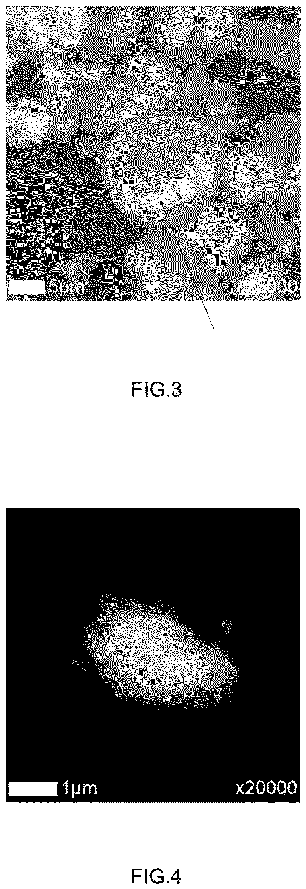

Reflected electron images of the particles obtained in the examples and the comparative examples were obtained with an SEM. A maximum diameter of a domain observed as a brightest region in the particle was evaluated. Table 1 shows the results. For reference, reflected electron images of Comparative Example 2 and Example 1 were shown in FIG. 3 and FIG. 4, respectively. Portions indicated by arrows correspond to the domain. The reflected electron image (FIG. 3) of Comparative Example 2 shows that a white domain whose maximum diameters considerably exceed 1 µm is formed. On the other hand, the reflected electron image (FIG. 4) of Example 1 shows that a large number of white domains are present in the form of particles and each white domain has a size significantly smaller than 1 µm.

### <ICP Analysis>

An ICP analysis was performed on the particles obtained in the examples and the comparative examples, and an atomic ratio of Li to a transition metal element was determined. Table 1 shows the results.

### <Crystallinity Evaluation by XRD Measurement>

An XRD measurement was performed on the particles obtained in the examples and the comparative examples, and an X-ray diffraction spectrum was obtained. In Comparative Examples 1 and 2 and Examples 1 to 4, a sharp peak was observed in a (003) plane of an R3m phase derived from a metal hydroxide, which is a typical spectrum for particles of crystal. In Examples 5 to 8, the peak was broad in the entire spectrum. This is a spectrum typical for amorphous particles.

### <Fabrication of Evaluation Lithium Ion Secondary Battery>

The particles of Comparative Example 1 and lithium hydroxide were mixed such that a mole ratio of Li/transition metal element was 1.05. The resulting mixture was fired under an oxygen atmosphere at 850°C for 10 hours, thereby obtaining a lithium transition metal composite oxide. The particles of Comparative Example 2 were fired under an oxygen atmosphere at 900°C for 10 hours, thereby obtaining a lithium transition metal composite oxide. The particles of each example were fired under an oxygen atmosphere at 850°C for 10 hours, thereby obtaining a lithium transition metal composite oxide.

The obtained lithium transition metal composite oxide (positive electrode active material), acetylene black (AB) as a conductive material, and polyvinylidene fluoride (PVDF) as a binder were mixed at a mass ratio of positive electrode active material : AB : PVDF = 85 : 10 : 5 in N-methylpyrrolidone (NMP), thereby preparing a paste for forming a positive electrode active material layer. This paste was applied onto aluminium foil with a thickness of 15 µm and dried, thereby producing a positive electrode sheet.

Natural graphite (C) as a negative electrode active material, styrene-butadiene rubber (SBR) as a binder, and carboxymethyl cellulose (CMC) as a thickener were mixed at a mass ratio of C : SBR : CMC = 98 : 1 : 1 in ion-exchanged water, thereby preparing a paste for forming a negative electrode active material layer. This paste was applied onto copper foil with a thickness of 10 µm and dried, thereby producing a negative electrode sheet.

As a separator sheet, a porous polyolefin sheet with a thickness of 20 µm having a three-layer structure of PP/PE/PP was prepared.

The positive electrode sheet, the negative electrode sheet, and the separator sheet were stacked, and an electrode terminal was attached to the resulting laminate, and the resultant were housed in a laminated case. Subsequently, a nonaqueous electrolyte was poured in the laminated case, and the laminated case was hermetically sealed. As the nonaqueous electrolyte, one in which LiPF₆ as a supporting electrolyte was dissolved at a concentration of 1.0 mol/L in a mixed solvent which included ethylene carbonate (EC), dimethyl carbonate (DMC), and ethyl methyl carbonate (EMC) at a volume ratio of 3 : 4 : 3 was used. In the manner described above, evaluation lithium ion secondary batteries of the examples and the comparative examples having a capacity of 10 mAh were obtained.

### <Initial Resistance Measurement>

Each evaluation lithium ion secondary battery was adjusted to have a state of charge (SOC) of 50%, and then placed in an environment of 25°C. Discharging was performed for 10 seconds with a current value of 100 mA, a voltage value after 10 seconds from the start of discharging was measured, and an initial battery resistance was calculated. Then, resistance ratios of the evaluation lithium ion secondary batteries other than Comparative Example 1 were obtained supposing that a resistance of the evaluation lithium ion secondary battery of Comparative Example 1 was 100. Table 1 shows the results.

### <Evaluation of Post-cycle Resistance Increase Rate>

Each evaluation lithium ion secondary battery was placed in an environment of 60°C, and 200 cycles of repeated charging and discharging in which one cycle included constant-current charging to 4.1 V with 1 C and constant-current discharging to 3.0 V with 1 C were performed. Thereafter, in the same manner as the initial resistance measurement, a battery resistance after 200 cycles was determined. From (battery resistance after 200 cycles of charging and discharging / initial resistance) × 100, a resistance increase rate (%) was obtained. Then, ratios of resistance increase rates of the evaluation lithium ion secondary batteries other than Comparative Example 1 were obtained supposing that a resistance increase rate of the evaluation lithium ion secondary battery of Comparative Example 1 was 100. Table 1 shows the results.

### [Table 1]

**Table 1**

| | Production Conditions | | Particles | | | Characteristic Evaluation | |
|---|---|---|---|---|---|---|---|
| | Li/Transition Metal Ratio | Aqueous Organic Solvent | Domain Size | Crystallinity | Li/Transition Metal Ratio | Ratio of Initial Resistance | Ratio of Resistance increase Rate |
| Comparative Example 1 | - | - | - | crystal | no Li | 100 | 100 |
| Comparative Example 2 | - | - | 1 *µ*m or more | crystal | 1.05 | 100 | 100 |
| Example 1 | 89.2 | - | less than 1*µ*m | crystal | 1.05 | 80 | 100 |
| Example 2 | 925 | - | less than 1*µ*m | crystal | 1.1 | 80 | 100 |
| Example 3 | 67.3 | - | less than 1*µ*m | crystal | 0.8 | 90 | 100 |
| Example 4 | 1027 | - | less than 1*µ*m | crystal | 1.2 | 90 | 100 |
| Example 5 | 7.1 | - | less than 1*µ*m | amorphous | 1.05 | 80 | 80 |
| Example 6 | 3.4 | ethanol | less than 1*µ*m | amorphous | 1.05 | 60 | 80 |
| Example 7 | 6.4 | THF | less than 1*µ*m | amorphous | 1.05 | 70 | 80 |
| Example 8 | 6.4 | methanol | less than 1*µ*m | amorphous | 1.05 | 75 | 80 |

It can be understood from the results of Table 1 that the particles disclosed here can provide particles convertible to a lithium transition metal composite oxide that can reduce an initial resistance of a lithium ion secondary battery. It can be understood that in the case where the particles are amorphous, the lithium ion secondary battery has high durability.

Specific examples of the present disclosure have been described in detail hereinbefore, but are merely illustrative examples, and are not intended to limit the scope of claims. The techniques described in claims include various modifications and changes of the above exemplified specific examples.

That is, the particles and the production method disclosed here are items [1] to [6]:
[1] Particles convertible to a lithium transition metal composite oxide by firing, wherein
   each of the particles contains lithium and a transition metal element,
   the particles have average particle size of 2.0 µm or more and,
   in the case of obtaining a reflected electron image of the particles with a scanning electron microscope, a domain observed as a brightest region in the particles has a maximum diameter less than 1 µm.
[2] The particles according to item [1], wherein an atomic ratio of lithium to the transition metal element is 0.75 or more and 1.25 or less.
[3] The particles according to item [1] or [2], wherein the particles are hydroxide or carbonate.
[4] The particles according to any one of items [1] to [3], wherein the particles are amorphous.
[5] The particles according to any one of items [1] to [4], wherein the transition metal element includes at least Ni, Co, and Mn.
[6] A Method for producing particles, the method including the steps of:
   preparing a mixed solution in which a water-soluble salt of lithium, a water-soluble salt of a transition metal, an ammonium ion donor, and a basic compound are dissolved; and
   precipitating particles containing lithium and the transition metal from the mixed solution, wherein
      (a) the basic compound is a hydroxide of an alkali metal or a hydroxide of an alkali earth metal, and a mole ratio of lithium to the transition metal in the mixed solution is 65 or more and 110 or less,
      (b) the basic compound is a carbonate of an alkali metal or a carbonate of an alkali earth metal, and a mole ratio of lithium to the transition metal in the mixed solution is 5.0 or more and 8.5 or less, or
      (c) the basic compound is a carbonate of an alkali metal or a carbonate of an alkali earth metal, and in the step of precipitating the particles, a water-soluble organic solvent having a solubility parameter δ of 13.0 or less and a polarity parameter P' of 3.5 or more is added to the mixed solution.

## Claims

1. Particles convertible to a lithium transition metal composite oxide by firing, wherein
each of the particles includes lithium and a transition metal element,
the particles have an average particle size of 2.0 µm or more, and
in the case of obtaining a reflected electron image of the particles with a scanning electron microscope, a domain observed as a brightest region in the particles has a maximum diameter less than 1 µm.

2. The particles according to claim 1, wherein an atomic ratio of lithium to the transition metal element is 0.75 or more and 1.25 or less.

3. The particles according to claim 1, wherein the particles are hydroxide or carbonate.

4. The particles according to claim 1, wherein the particles are amorphous.

5. The particles according to claim 1, wherein the transition metal element includes at least Ni, Co, and Mn.

6. A method for producing particles, the method comprising the steps of:
preparing a mixed solution in which a water-soluble salt of lithium, a water-soluble salt of a transition metal, an ammonium ion donor, and a basic compound are dissolved; and
precipitating particles containing lithium and the transition metal from the mixed solution, wherein
(a) the basic compound is a hydroxide of an alkali metal or a hydroxide of an alkali earth metal, and a mole ratio of lithium to the transition metal in the mixed solution is 65 or more and 110 or less,
(b) the basic compound is a carbonate of an alkali metal or a carbonate of an alkali earth metal, and a mole ratio of lithium to the transition metal in the mixed solution is 5.0 or more and 8.5 or less, or
(c) the basic compound is a carbonate of an alkali metal or a carbonate of an alkali earth metal, and in the step of precipitating the particles, a water-soluble organic solvent having a solubility parameter δ of 13.0 or less and a polarity parameter P' of 3.5 or more is added to the mixed solution.
